# EUROPEAN PATENT APPLICATION

(11) **EP 1 300 723 A1**
(43) Date of publication of application: **09.04.2003**
(21) Application number: 01947910.4
(22) Date of filing: 06.07.2001
(51) Int. Cl.: G03B 27/08

(54) **FILM ADHESION TESTER, FILM ADHESION TESTING METHOD, AND FILM FOR TEST**

(30) Priority: 07.07.2000 JP 2000207312
(71) Applicant: Sony Corporation, Tokyo 141-0001 (JP)
(72) Inventor: SAITO, Etsuro, Sony Human Capital Corporation, Tokyo 108-0073 (JP)
(74) Representative: Melzer, Wolfgang, Dipl.-Ing.
(86) International application number: JP0105920
(87) International publication number: WO02005027

(57) **Abstract**

The present invention is to easily examine the contact state of two piled films in a short time. In the present invention, light from a light source 13 is radiated from a base material side of a test negative 71 under the condition where a mat surface 70B having a light scattering property of a test film 70 faces and contacts a sensitized surface 71B having a stripe pattern 72 recorded thereon of a test negative 71, the image of the stripe pattern irradiated with the transparent light which goes through the test negative 71 and the test film 70 in order is photographed from the surface 70A side of the test film 70, and the image of the photographed stripe pattern 72 is displayed, thereby the user can visually recognize that the test negative 71 and the test film 70 are in an optimal contact state at this time when the image of the stripe pattern 72 is clearly displayed and on the other hand, the user can visually recognize that the test negative 71 and the test film 70 have space between them and are in the non-contact state, not in the contact state, at this time when the image of the stripe pattern 72 is unclearly displayed.

## Description

### Technical Field

The present invention relates to a device for examining contact state of films, a method of examining contact state of films and a film for examination, and for example, is suitably applicable to a printer (developing device) for a movie film.

### Background Art

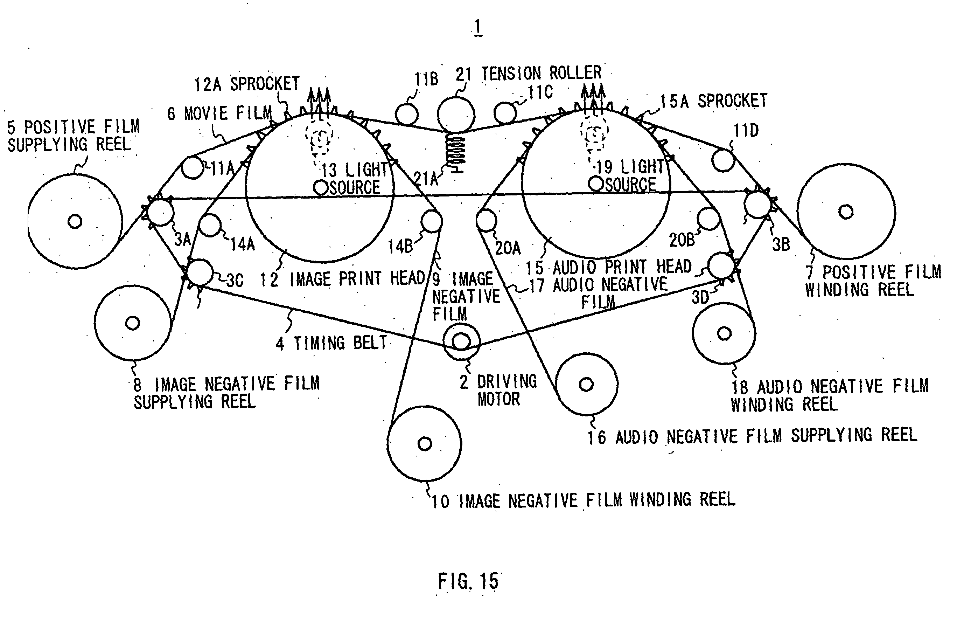

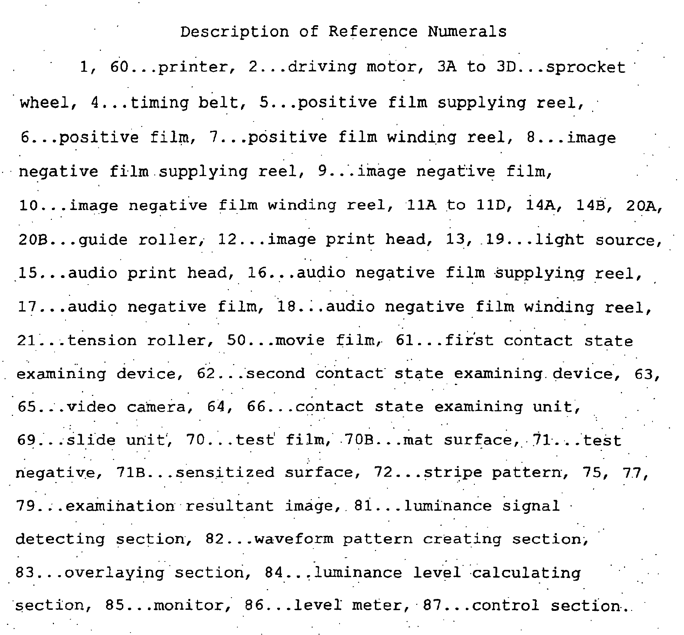

Conventionally, in a printer 1 for developing a movie film, sprocket wheels 3A to 3D are rotary-driven clockwise by a timing belt 4 as a driving motor 2 rotates clockwise, as shown in fig. 15.

In this case, the sprocket wheel 3A fits to perforations of the movie film 6, which is an un-developed positive film, drawn from a positive film supplying reel 5, and the sprocket wheel 3B fits to perforations of the movie film 6 to be winded around a positive film winding reel 7.

Further, the sprocket wheel 3C fits to perforations of an image negative film 9 drawn from the image negative film supplying reel 8, and the sprocket wheel 3D fits to perforations of an audio negative film 17 to be winded around an audio negative winding reel 18.

That is, in the printer 1, the un-developed movie film 6 is drawn from the positive film supplying reel 5 according the rotations of the sprocket wheels 3A and 3B by the driving motor 2, and the movie film 6 is winded around the positive film winding reel 7 through a guide roller 11A, an image print head 12, a guide roller 11B, a tension roller 21, a guide roller 11C, an audio print head 15, and a guide roller 11D.

In the printer 1, simultaneously, the image negative film 9 is drawn from the image negative film supplying reel 8 according to the rotation of the sprocket wheel 3C, and then is winded around an image negative film winding reel 10 through a guide roller 14A, the image print head 12, and a guide roller 14B.

Therefore, in the printer 1, both the perforations of the image negative film 9 and the movie film 6 fit to the sprocket 12A of the image print head 12 while piled, so that they run in a contact state where the movie film 6 is on the image negative film 9.

Then, in the printer 1, the irradiation area of light from a light source 13 provided inside the image print head 12 is adjusted by a window-shaped image print mask provided on the peripheral surface facing the light source 13, and light from the light source 13 of which the irradiation area has been adjusted, is radiated on the movie film 6 through the image negative film 9, so that the images of frames of the image negative film 9 are sequentially transcribed on the movie film 6.

Further, at the same time, in the printer 1, the audio negative film 17 is drawn from an audio negative film supplying reel 16 according to the rotation of the sprocket wheel 3D and then is winded around the audio negative film winding reel 18 through a guide roller 20A, the audio print head 15, and a guide roller 20B.

Therefore, in the printer 1, both the perforations of the audio negative film 17 and the movie film 6 fit to the sprocket 15A of the audio print head 15 while piled, therefore they run in a contact state where the movie film 6 is on the audio negative film 17.

Then, in the printer 1, the irradiation area of light from a light source 19 provided inside the audio print head 15 is adjusted with the window-shaped print mask provided on the peripheral surface facing the light source 19, and light from the light source 19 of which the irradiation area has been adjusted is radiated on the movie film 6 through the audio negative film 17, to sequentially transcribe digital audio data and analog audio signal of the audio negative film 19 on the movie film 6.

Here, the image negative film 9 and the audio negative film 17 each is made of base material coated with photographic emulsion, and is placed so that the photographic emulsion-coated surface having images, or digital audio data and analog audio signals recorded thereon faces upward. Further, the movie film 6 is also made of base material coated with photographic emulsion, like the image negative film 9 and the audio negative film 17, and is placed so that the photographic emulsion-coated surface on which images, digital audio data and analog audio signals should be recorded, faces downward.

That is, it is desirable that the movie film 6 and the image negative film 9 or the audio negative film 17 are in a contact state with both photographic emulsion-coated surfaces faced each other. Therefore, in the printer 1, the contact state of the movie film 6 and the image negative film 9 or the audio negative film 17 is set to be optimal by a tension adjusting spring 21A attached to the tension roller 21, and the images, digital audio data and analog audio signals are transcribed on the un-developed movie film 6 and then developed, in order to create a final objective movie film.

By the way, in the printer 1 having such a configuration, precise adjustments including a positional adjustment of the rotation shaft direction, that is, the film width direction, of the guide rollers 11A to 11D, 14A, 14B, 20A, 20B, and a tension adjustment using the tension roller 21 has to be conducted in order to obtain stable contact states of the movie film 6, and the image negative film 9 and the audio negative film 17.

However, in the printer 1, such adjustment operations can not be finished only once, but has to be repeated many times until a transcription is actually performed using a test film instead of the movie film 6, the resultant test film is developed, and the accurate transcription is recognized to be done by checking the transcribed images, digital audio data, and analog audio signals.

As described above, the printer 1 requires the development processing to confirm the actual transcription result using the test film, which cause a problem in that long time is required only for examining the contact state of films.

### Description of the Invention

The present invention is made in view of the aforementioned point, and is intended to propose a device for examining contact state of films, a method of examining contact state of films, and a film for examination which are capable of easily examining the contact state of two piled films in a short time.

In the present invention to solve such problems, light from a light source is radiated from the other surface side of a first film under such a condition that one surface having the light scattering property of the second film faces and contacts one surface having a prescribed pattern recorded thereon of the first film, the image of the prescribed pattern irradiated with the transparent light which goes through the first film and the second film in order is photographed from the other surface side of the second film, and the image of the photographed prescribed pattern is displayed. Thereby, a user can visually recognize that the first film and the second film are in an optimal contact state at this time when the image of the prescribed pattern is clearly displayed and on the other hand, the user can visually recognize that the first film and the second film are not in the optimal contact state but in the non-contact state due to space between them at this time when the image of the prescribed pattern is unclearly displayed.

Further, in the present invention, light from the light source is radiated from the other surface side of the first film under such a condition that one surface having the light scattering property of the second film faces and contacts one surface having the prescribed pattern recorded thereon of the first film, the image of the prescribed pattern irradiated with the transparent light which goes through the first film and the second film in order is photographed from the other surface side of the second film, a waveform pattern having a luminance level in the image of the photographed prescribed pattern is created and the waveform pattern having the luminance level is displayed. Therefore, the user can visually recognize that the first film and the second film are in an optimal contact state at this time when the outlines of the rising and falling of the waveform pattern having the luminance level is clearly displayed and on the other hand, the user can visually recognize that the first film and the second film are not in the optimal contact state but in the non-contact state due to space between them at this time when the outlines of the rising and falling of the waveform pattern having the luminance level is unclearly displayed.

Furthermore, in a film for examination of the present invention used in a device for examining contact state of films to examine the contact state of piled films, light from the light source is radiated by the device for examining contact state of films on the film for examination side under such a condition that the film for examination and a second film are piled, and at the time of examining the contact state based on the photographing result obtained by photographing the image irradiated with the transparent light which goes through the film for examination and the second film in order, a pattern having a plurality of stripes is formed in the running direction of the films on one surface of the film for examination that has to face and contact one surface having the light scattering property of the second film. Thereby, the device for examining contact state of films can photograph the stripe pattern as if the film stops even the films are running, so that the contact state can be accurately examined.

### Brief Description of the Drawings

Fig. 1 is a schematic diagram showing the configuration of a movie film.
Fig. 2 is a schematic diagram showing the configuration of a printer of the present invention.
Fig. 3 is a schematic diagram showing the cross sectional structure of an image print head.
Fig. 4 is a schematic diagram showing the cross sectional structure of an audio print head.
Fig. 5 is a schematic perspective view showing the situation among a video camera, a test film and a test negative.
Fig. 6 is a schematic diagram showing a stripe pattern on the test negative.
Fig. 7 is a block diagram showing the configuration of the first contact state examining device.
Fig. 8 is a schematic diagram showing a photographing result and a waveform pattern in the contact state.
Fig. 9 is a schematic diagram showing a photographing result and a waveform pattern in the non-contact state.
Fig. 10 is a schematic diagram showing a photographing result and a waveform pattern when the contact state is changing.
Fig. 11 is a schematic diagram showing the image of the examination resultant indicating the contact state.
Fig. 12 is a schematic diagram showing the image of the examination resultant indicating the non-contact state.
Fig. 13 is a schematic diagram showing the image of the examination resultant indicating the change in the contact state.
Fig. 14 is a flowchart showing the contact state examination processing procedure.
Fig. 15 is a schematic diagram showing the configuration of a conventional printer.

### Best Mode for Carrying Out the Invention

Hereinafter, an embodiment of this invention will be described with reference to drawings.

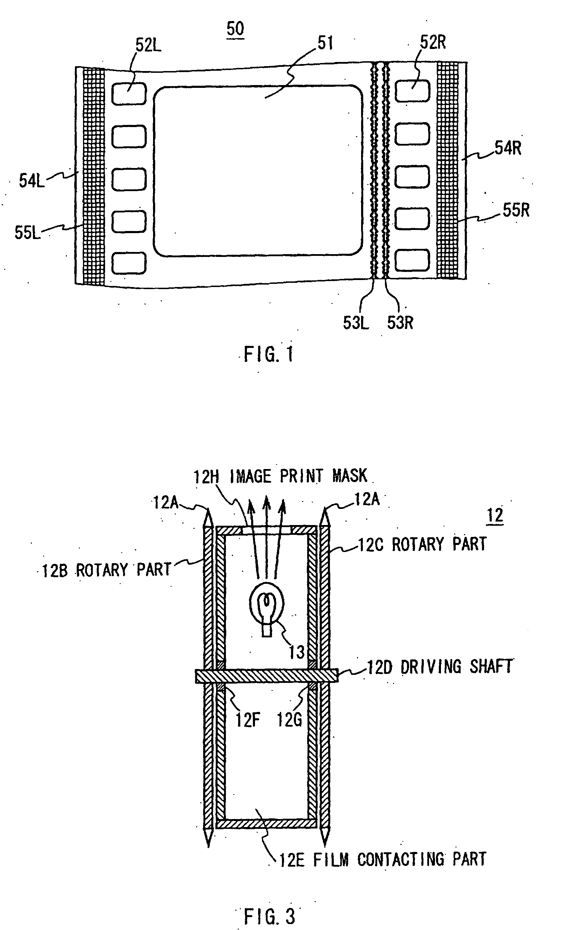

In Fig. 1, a reference numeral 50 shows a movie film which is a positive film in the SDDS (Sony Digital Dynamic Sound) format and is used to present movies. The movie film 50 comprises an image area 51 for recording an image to be projected thereon, perforations 52L, 52R provided on the both sides of the image area 51 for winding the movie film 50, analog sound tracks 53L, 53R linearly provided between the image area 51 and the perforations 52R in the running direction of the film, and digital sound tracks 55L, 55R for each channel, linearly provided between the perforations 52L, 52R and the both edges 54L, 54R in the running direction of the film respectively.

The analog sound track 53L records an analog audio signal for the left channel thereon, and the analog sound track 53R records an analog audio signal for the right channel thereon. The analog sound tracks 53L and 53R each is a flare line of which the width continuously varies according to an audio waveform.

Further, the digital sound track 55L records digitized digital audio data for the left channel thereon, and the digital sound track 55R records digitized digital audio data for the right channel thereon. The digital sound tracks 55L and 55R each is a bar code of which the pattern is arranged in an orthogonal direction to the running direction of the film.

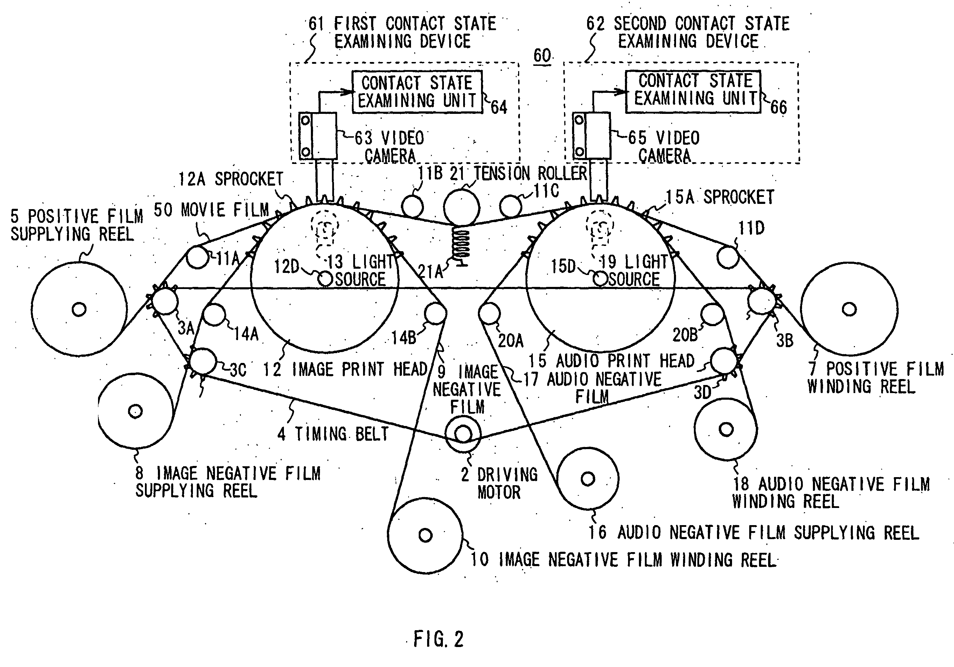

In the present invention, a printer 60 as shown in Fig. 2 is used to transcribe an image, an analog audio signal, and digital audio data on such a movie film 50.

That is, as shown in Fig. 2 in which the same reference numerals are applied to parts corresponding to those of Fig. 15, the printer 60 has sprocket wheels 3A to 3D that are rotated clockwise by a timing belt 4 as a driving motor 2 rotates clockwise.

In this case, the sprocket wheel 3A fits in the perforations 52L and 52R of the movie film 50, that is an un-developed positive film, drawn from a positive film supplying reel 5, and the sprocket wheel 3B fits in the perforations 52L and 52R of the movie film 50 to be winded around a positive film winding reel 7.

In addition, the sprocket wheel 3C fits in the perforations of an image negative film 9 drawn from an image negative film supplying reel 8, and the sprocket wheel 3D fits in the perforations of an audio negative film 17 to be winded around an audio negative winding reel 18.

That is, in the printer 60, the un-developed movie film 50 is drawn from the positive film supplying reel 5 according to the rotations of the sprocket wheels 3A and 3B by the driving motor 2, is run through a guide roller 11A, an image print head 12, a guide roller 11B, a tension roller 21, a guide roller 11C, an audio print head 15, and a guide roller 11D, and then is winded around the positive film winding reel 7.

At the same time, in the printer 60, the image negative film 9 is drawn from the image negative film supplying reel 8 according to the rotation of the sprocket wheel 3C, and then is winded around an image negative film winding reel 10 through a guide roller 14A, the image print head 12, a guide roller 14B.

Thereby, in the printer 60, both perforations of the image negative film 9 and the movie film 50 are fitted to the sprocket 12A of the image print head 12 at the same time, with both perforations of the image negative film 9 and the movie film 50 piled, thus they run keeping a contact state where the movie film 50 is on the image negative film 9.

And in the printer 60, an irradiation area of light from a light source 13 provided inside the image print head 12 is controlled by a window-shaped image print mask (described later) provided on the peripheral surface facing the light source 13, to radiate light from the light source 13 on the movie film 50 through the image negative film 9, so that images of frames of the image negative film 9 are sequentially transcribed on the image areas 51 (Fig. 1) of the movie film 50.

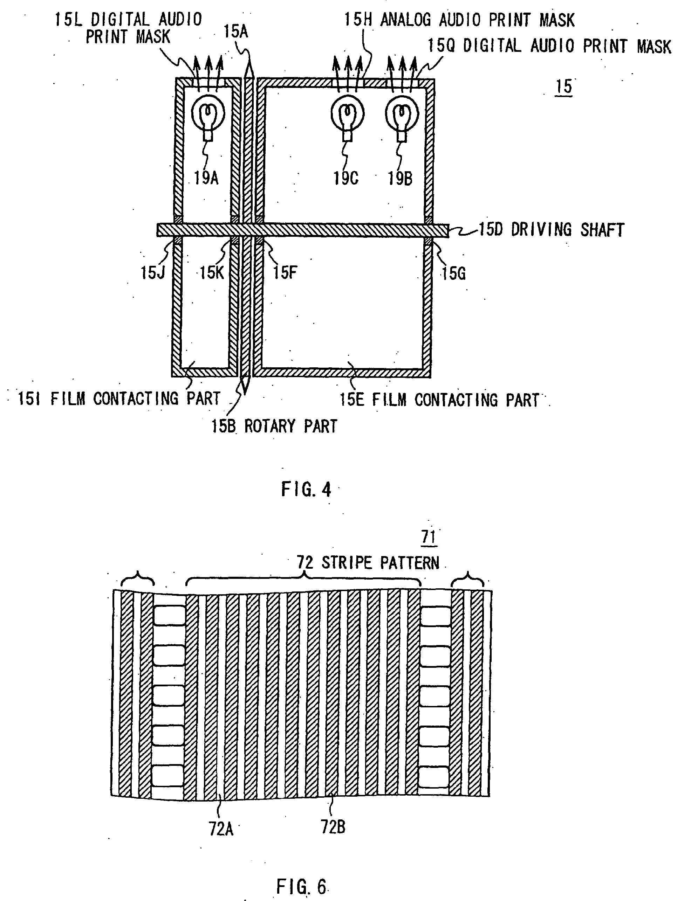

In actual, as shown in Fig. 3, the image print head 12 has disc rotary parts 12B and 12C which each has a plurality of sprockets 12A matching the pitch intervals of the perforations of the image negative film 9 and the movie film 50 on its peripheral surface, rotatably drives the rotary parts 12B and 12C with a driving shaft 12D connected to a motor (not shown), so that the image negative film 9 and the movie film 50 can run while contacting each other.

At this time, a cylindrical film contacting part 12E which the driving shaft 12D goes through in such a state of being sandwiched by the rotary parts 12B and 12C, keeps it position by the bearings 12F and 12G for supporting the driving shaft 12D, independent from the rotations of the rotary parts 12B and 12C.

Therefore, in the printer 60, the rotary parts 12B and 12C of the image print head 12 are rotated by the driving shaft 12D to run the image negative film 9 and the movie film 50 in a contact state, so that the light source 13 can sequentially radiate light on the frames of the image negative film 9 and the movie film 50 through the image print mask 12H provided at the position where the image area 51 of the movie film 50 is placed.

In addition, at the same time, in the printer 60, the audio negative film 17 is drawn from the audio negative supplying reel 16 as the sprocket wheel 3D rotates, and then is winded around the audio negative film winding reel 18 through the guide roller 20A, the audio print head 15, and the guide roller 20B.

Therefore, in the printer 60, the perforations of the audio negative film 17 and the movie film 50 are fitted to the sprocket 15A of the audio print head 15 together, with the perforations of the movie film 50 and the perforations of the audio negative film 17 piled, so that the movie film 50 can run contacting the audio negative film 17.

Then, in the printer 60, the irradiation area of light from the light source 19 provided inside the audio print head 15 is controlled by a window-shaped analog audio print mask (described later) and a digital audio print mask (described later) provided on the peripheral surface facing the light source 19, to radiate light from the light source 19 on the movie film 50 through the audio negative film 17, so that the analog audio signal and the digital audio data on the audio negative film 17 are sequentially transcribed on the analog sound tracks 53L, 53R and the digital sound tracks 55L, 55R of the movie film 50.

In actual, as shown in Fig. 4, the audio print head 15 has a disc rotary part 15B which has a plurality of sprockets 15A matching the perforation intervals of the audio negative film 17 and the movie film 50 on its peripheral surface, wherein the rotary part 15B is rotatably driven by a driving shaft 15D connected to a motor (not shown), so that the audio negative film 17 and the movie film 50 can run in a contact state.

At this time, a cylindrical film contacting part 15E which the driving shaft 15D goes through on the right side of the rotary part 15B keeps its position by bearings 15F and 15G for supporting the driving shaft 15D, independent from the rotations of the rotary parts 15B and 15C.

In addition, the film contacting part 15E is provided with a window-shaped analog audio print mask 15H at the position corresponding to the analog sound tracks 53L 53R of the movie film 50 (Fig. 1), the window-shaped digital audio mask 15Q at the position corresponding to the digital sound track 55R, and light sources 19B and 19C at the internal positions facing the analog audio print mask 15H and the digital audio mask 15Q respectively.

Similarly, a cylindrical film contacting part 15I where the driving shaft 15D goes through on the left side of the rotary part 15B keeps its position by the bearings 15J and 15K for supporting the driving shaft 15D, independent from rotation of the rotary part 15B.

The film contacting part 15I is also provided with a window-shaped digital audio print mask 15L at the position corresponding to the digital sound track 55L (Fig. 1) of the movie film 50, and a light source 19A at the internal position facing the digital audio print mask 15L.

Therefore, in the printer 60, the audio negative film 17 and the movie film 50 run while contacting each other by rotating the rotary part 15B of the audio print head 15 by the driving shaft 15D, so that the light sources 19A to 19C each can sequentially radiate light on the frames of the audio negative film 17 or the movie film 50 through the digital audio print mask 15L, 15Q or the analog audio print mask 15H.

Here, the image negative film 9 and the audio negative film 17 is made of base material coated with photographic emulsion and is placed so that the surface coated with photographic emulsion, having the image, analog sound track and digital sound track recorded thereon faces upward. Similarly to the image negative film 9 and the audio negative film 17, the image film 50 is made of base material coated with photographic emulsion and is placed so that the surface coated with photographic emulsion on which the image, digital audio data and analog audio signal is to be recorded faces downward.

That is, it is desirable for the movie film 50, and the image negative film 9 or the audio negative film 17 to contact each other in a state where their coated surfaces face each other. Therefore, in the printer 60, the tension adjusting spring 21A attached to the tension roller 21 adjusts the movie film 50, the image negative film 9 and the audio negative film 17 to be in such an optimal contact state as not to have space between them and then, images on the image negative film 9, digital audio data and analog audio signals on the audio negative film 17 are transcribed on the un-developed movie film 50.

In addition to the above configuration, in the printer 60 (Fig. 1), a first contact state examining device 61 as the device for examining contact state of films of the present invention is detachably attached at a position facing the contacting portion of the movie film 50 and the image negative film 9 on the image print head 12. Further, a second contact state examining device 62 as the device for examining contact state of films of the present invention is detachably attached at the position facing the contacting portion of the movie film 50 and the audio negative film 17 on the audio print head 15.

The first contact state examining device 61 comprises a video camera 63 serving as a photographing means and a contact state examining unit 64, and the second contact state examining device 62 comprises a video camera 65 serving as a photographing means and a contact state examining unit 64 as well.

These first contact state examining device 61 and the second contact state examining device 62 are previously to examine the contact state of a test film 70 and a test negative 71, by using the test film 70 as a second film having the same measurements as the movie film 50 instead of the movie film 50, and the test negative 71 as a first film and a film for examination having the same measurements as the image negative film 9 and the audio negative film 17 instead of the image negative film 9 and the audio negative film 17, before the actual transcription on the movie film 50.

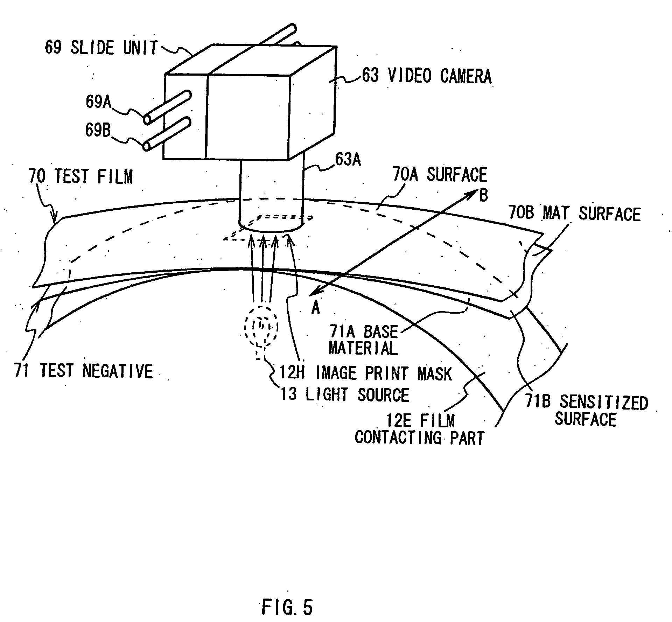

In actual, as shown in Fig. 5, the test film 70 has the same physical properties as the movie film 50 being the positive film, in which the side facing the video camera 63 is a transparent surface 70A and the image receiving surface contacting the test negative 71 is a frosted glass mat surface 70B having a light scattering property instead of a sensitized surface.

Further, in the test negative 71, the surface contacting the film contacting part 12E of the image print head 12 is base material 71A, and the surface contacting the mat surface 70B of the test film 70 is a sensitized surface 71 coated with photographic emulsion.

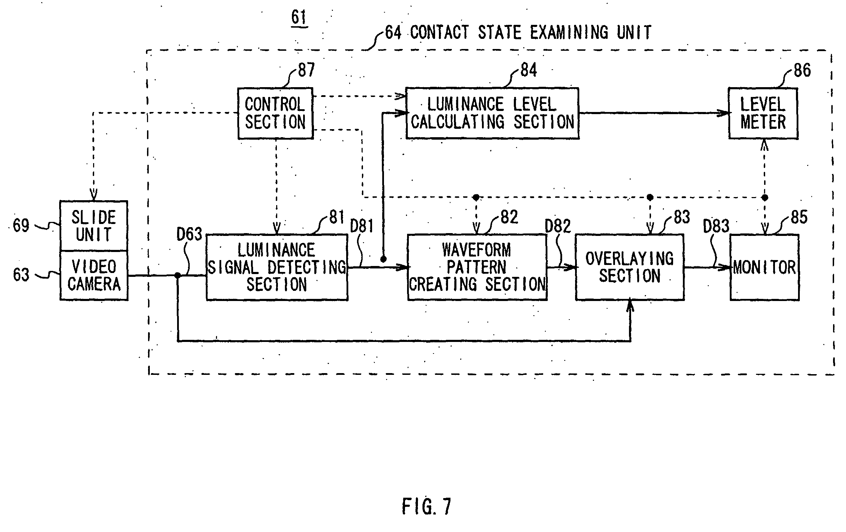

The sensitized surface 71B of the test negative 71 has a stripe pattern 72 linearly formed in the running direction of the test negative 71 as shown in Fig. 6, a high transparent part 72A having the high transparent rate and a low transparent part 72B having the low transparent rate are alternately laid to form the stripe pattern.

Therefore, since the stripe pattern 72 is linearly formed in the running direction, when the test negative 71 runs contacting the test film 70, the image of the stripe pattern 72 is clearly photographed as if it stops, even while the films are running like an actual film being transcribed.

In this connection, the stripe pattern 72 has the high-transparent part 72A and the low transparent part 72B of approximately 25 [µm] width, and thereby one cycle of the high transparent part 72A and the low transparent part 72B is approximately 50 [µm]. Note that, it is not necessary that the high transparent part 72A and the low transparent part 72B each has a width of 25 [µm] and a duty rate of 50 [%] and also it is not necessary that the high transparent part 72A and the low transparent rate 72B have the same width and are periodically arranged, as log as a width and a duty rate are sufficient so as to perform photographing with resolution of the video camera 63.

The video camera 63 (Fig. 5) in the first contact state examining device 61 is arranged so as to photograph the surface 70A of the test film 70 through a lens 63A, and a control section 87 (described later in Fig. 7) of the contact state examining unit 64 controls the video camera 63 so as to shift on the test film 70 in the film width direction (in the arrow A direction and arrow B direction) with guide shafts 69A and 69B of a slide unit 69 united with the video camera 63.

Thereby, the video camera 63 can photograph the image of the stripe pattern 72 of the test negative 71 which is projected on the surface 70A through the mat surface 70B and the surface 70A of the running test film 70, all over the area of the image print mask 12H.

By the way, in the video camera 63, the depth of field has been set so that an object is not out of focus even if the test film 70 and the test negative 71 are in a weak contact state and therefore there is space between the test film 70 and the test negative 71, which makes it possible to accurately photograph in focus even in a non-contact state where the test film 70 and the test negative 71 has space between them.

In this connection, since the test film 70 and the test negative 71 both have perforations, like the movie film 50, the image negative film 9, and the audio negative film 17, the explanation will be omitted in Fig. 5.

Further, the video camera 65 in the second contact state examining device 62 has also the same structure as the video camera 63 of the first contact state examining device 61 and the similar depth of field, and can shift on the test film 70 on the print head 15 in the film width direction (in the arrow A direction and arrow B direction), like the video camera 63 of the first contact state examining device 61.

Thereby, the video camera 65 of the second contact state examining device 62 can photograph the image of the stripe pattern 72 of the test negative 71 which is projected on the surface 70A through the mat surface 70B and the surface 70A of the running test film 70, all over the analog audio print mask 15H, the digital audio print masks 15L and 15Q.

As shown in Fig. 7, the video camera 63 of the first contact state examining device 61 sends image data D63 which is obtained by photographing the image of the stripe pattern 72 of the test negative 71 going through the mat surface 70B and the surface 70A of the test film 70 through the image print mask 12H, to a luminance signal detecting section 81 and an overlaying section 83 of the contact state examining unit 64.

The contact state examining unit 64 is composed of a luminance signal detecting section 81, a waveform pattern creating section 82, the overlaying section 83, a luminance level calculating section 84, a monitor 85 serving as a display means, and a level meter 86 serving as a luminance level display means, in which the contact state of the test film 70 and the test negative 71 is detected under the control of the control section 87 being a CPU (Central Processing Unit).

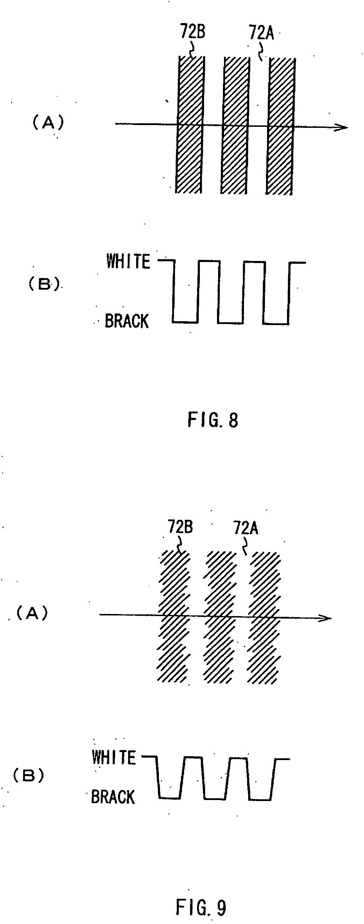

When the test film 70 and the test negative 71 are in an optimal contact state, the video camera 63 obtains image data D63 obtained by clearly photographing the outlines of the high transparent part 72A and the low transparent part 72B of the stripe pattern 72 in focus, as shown in Fig. 8(A).

On the other hand, when the test film 70 and the test negative 71 has space between them due to the non-contact state, the video camera 63 obtains image data D63 showing unclear outlines of the high transparent part 72A and the low transparent part 72B of the stripe pattern 72 due to defocus as shown in Fig. 9(A).

The luminance signal detecting section 81 detects a voltage level of the luminance signal of the stripe pattern 72 based on the image data D63, and sends the detection resultant data D81 to the waveform pattern creating section 82 and the luminance level calculating section 84.

The waveform pattern creating section 82 creates a waveform pattern representing the voltage level of the luminance signal based on the detection resultant data D81, which is detected by the luminance signal detecting section 81, and sends this waveform pattern data D82 to the overlaying section 83.

When the video camera 63 obtains the image data D63 showing the clear outlines of the high transparent part 72A and the low transparent part 72B of the stripe pattern 72 in focus as shown in Fig. 8(A), the waveform pattern creating section 82 creates waveform pattern data D82 which clearly shows the rising and falling between a white level and a black level as shown in Fig. 8(B).

On the other hand, when the video camera 63 obtains the image data D63 representing the unclear outlines of the high transparent part 72A and the low transparent part 72B of the stripe pattern 72 due to defocus as shown in Fig. 9(A), the waveform pattern creating section 82 creates waveform pattern data D82 which unclearly shows the rising and falling between the white level and the black level as shown in Fig. 9(B).

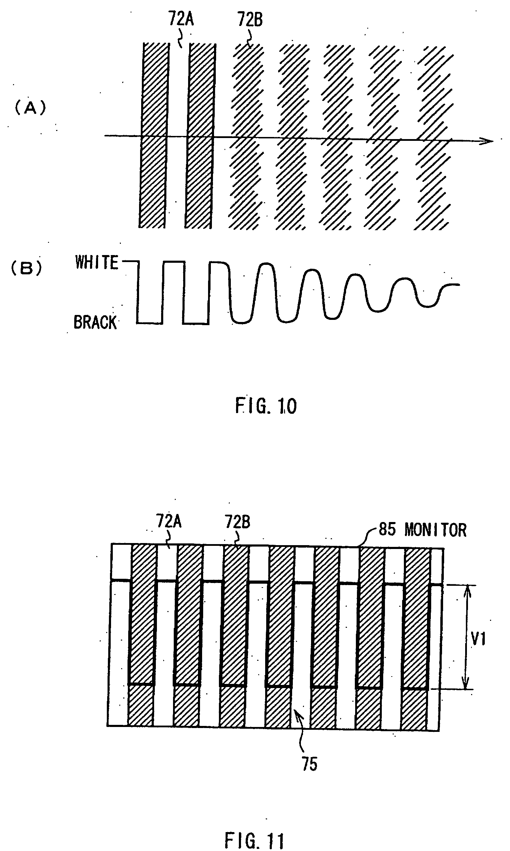

Note that, when the video camera 63 obtains the image data D63 showing the condition where the outlines of the high transparent part 72A and the low transparent part 72B of the stripe pattern 72 gradually changes from the clear focus state to the unclear defocus state as shown in Fig. 10(A), the waveform pattern creating section 82 creates waveform pattern data D82 showing the condition where the rising and falling between the white level and the black level gradually become nuclear as shown in Fig. 10(B).

The overlaying section 83 overlays the image data D63 directly supplied from the video camera on the waveform pattern data D82 to generate overlaid data D83 which is then displayed on the monitor 85.

That is, when the video camera 63 obtains the image data D63 (Fig. 8(A)) showing the clear outlines of the high transparent part 72A and the low transparent part 72B of the stripe pattern 72 in focus, the monitor 85 displays an examination resultant image 75 as shown in Fig. 11, which is obtained by overlaying a waveform pattern showing the clear rising and falling between the white level and the black level on the image of the stripe pattern 72 having the clear outlines of the high transparent part 72A and the low transparent part 72B, which can make a user visually recognize at this time that the test film 70 and the test negative 71 are in an optimal contact state.

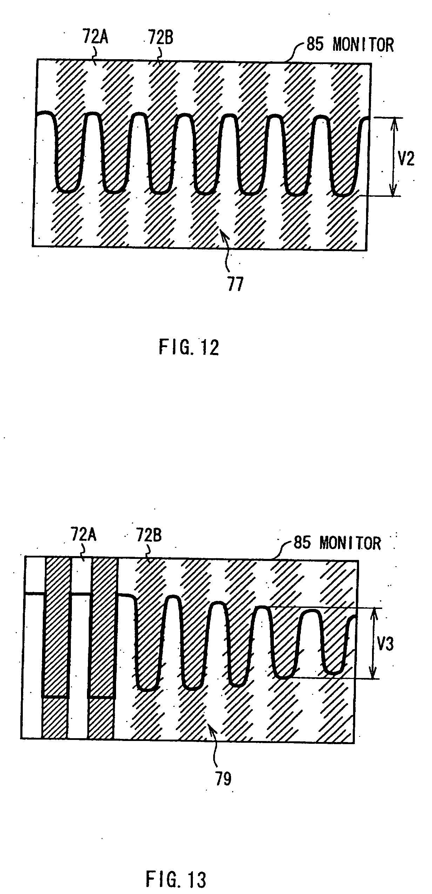

On the other hand, when the video camera 63 obtains the image data D63 (Fig. 9(A)) showing the unclear outlines of the high transparent part 72A and the low transparent part 72B of the stripe pattern 72 due to defocus, the monitor 85 displays an examination resultant image 77 as shown in Fig. 12, which is obtained by overlaying the waveform pattern showing the unclear rising and falling between the white level and the black level on the image of the stripe pattern 72 having the unclear outlines of the high transparent part 72A and the low transparent part 72B, which can make a user visually recognize at this time that the test film 70 and the test negative 71 has space due to a non-contact state.

In addition, when the video camera 63 obtains the image data D63 (Fig. 10(A)) showing the condition where the high transparent part 72A and the low transparent part 72B of the stripe pattern 72 gradually changes from the clear focus state to the unclear defocus state, the monitor 85 displays an examination resultant image 79 as shown in Fig. 13, which is obtained by overlaying the waveform pattern in which the rising and falling between the white level and the black level gradually becomes unclear, on the image of the stripe pattern 72 in which the outlines of the high transparent part 72A and the low transparent part 72B gradually changes, which can make a user visually recognize at this time that the test film 70 and the test negative 71 partly have space between them and are partly in a contact state.

By the way, the luminance level calculating section 84 calculates an average of the voltage level of the luminance signal based on the detection resultant data D81 supplied from the luminance signal detecting section 81, and sends it to the level meter 86 as luminance level data D84 of the whole image data D63 that is the photographing result.

That is, when the video camera 63 obtains the image data D63 (Fig. 8(A)) showing the clear outlines of the high transparent part 72A and the low transparent part 72B of the stripe pattern in focus, the level meter 86 numerically displays the voltage value (average) of the voltage level V1 shown in Fig. 11 as the luminance level.

In addition, when the video camera 63 obtains the image data D63 (Fig. 9(A)) showing the unclear outlines of the high transparent part 72A and the low transparent part 72B of the stripe pattern 72 due to defocus, the level meter 86 numerically displays the voltage value (average) of the voltage level V2 (V1 > V2) shown in Fig. 12 as the luminance level.

Further, when the video camera 63 obtains the image data D63 (Fig. 10(A)) showing the condition where the outlines of the high transparent part 72A and the low transparent part 72B of the stripe pattern 72 gradually changes from the clear focus state to the unclear defocus state, the level meter 86 numerically displays the voltage value (average) of the voltage level V3 shown in Fig. 13 as the luminance level as shown in Fig. 13.

As described above, the first contact state examining device 61 uses the examination result images 75, 77, and 79 displayed on the monitor 85 so as to make a user visually recognize the contact state of the test film 70 and the test negative 71 (concretely, which parts have space), and also uses the numerical voltage levels V1 to V3 displayed on the level meter 86 so as to make the user recognize whether they are in the contact state or in the non-contact state (have space or not) by numerals.

As a result, the user can recognize the parts having space between the test film 71 and the test negative 72 referring to the examination resultant images 75, 77, 79 displayed on the monitor 85 and also, can recognize that he/she can set them to be in the contact state by adjusting the average of the luminance level displayed on the level meter 86 to be the maximum value (voltage level V1).

For example, the user performs the shaft direction adjustment (that is, film width direction adjustment) on the guide rollers 11A to 11D, 14A and 14B, and 20A and 20B, the driving servo adjustment on the positive film supplying reel 5 and the positive film winding reel 7, and the tension adjustment on the tension roller 21 while confirming the examination results displayed on the monitor 85 and the level meter 86, so that the test film 70 and the test negative 71 are easily set to be in an optimal contact state in a short time, without performing the development processing.

Further, the second contact state examining device 62 has the same circuit structure as the first contact state examining device 61, and by the similar method, detects the contact state of the test film 70 and the test negative 71 based on the image data photographed through the analog audio mask 15H and the digital audio masks 15L and 15Q, and therefore, the explanations will be omitted.

Then, since the printer 60 can set the test film 70 and the test negative 71 to be in the optimal contact state, the actual movie film 50, the movie negative film 9 and the audio negative film 17 can be set to perform the print processing after removing the first contact state examining device 61 and the second contact state examining device 62.

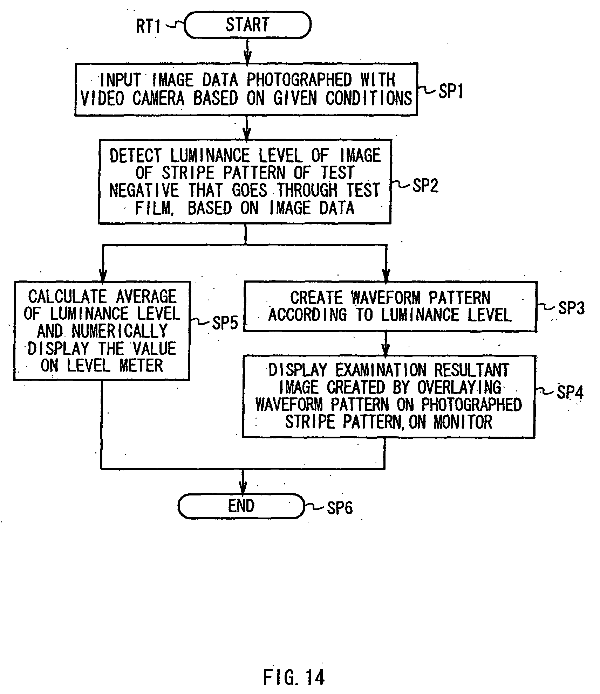

Next, the aforementioned contact state examining processing procedure by the first contact state examining device 61 will be explained with reference to a flowchart of Fig. 14. That is, in the first contact state examining device 61 starts the aforementioned contact state examining processing procedure at starting step of a routine RT1 of Fig. 14, and moves to step SP1.

At step SP1, when light from the light source 13 through the image print mask 12H is radiated from the base material 71A side of the test negative 71 under the condition where the sensitized surface 71B having the stripe pattern formed thereon of the test negative 71 faces and contacts the mat surface 70B of the test film 70, the control section 87 of the contact state examining unit 64 inputs the image data D63 obtained by taking the transparent light on the surface 70A of the test film 70 through the running test negative 71 and test film 70 into the video camera 63, to the luminance signal detecting section 81, then moves to next step SP2.

At step SP2, the control section 87 detects the luminance level of the image of the stripe pattern 72 of the test negative 71 going through the test film 70, based on the image data D63 with the luminance signal detecting section 81, and moves to . next step SP3.

At step SP3, the control section 87 creates the waveform pattern according to the luminance level, which is detected at step SP2, with the waveform pattern creating section 82, and then moves to next step SP4.

At step SP4, the control section 87 creates the examination resultant image 75, 77 or 79 by overlaying the waveform pattern on the image of the stripe pattern 72 photographed by the video camera 63 for overlaying with the overlaying section 83, displays it on the monitor 85, and then moves to step SP6 where the processing is terminated.

During the processing between step SP3 and step SP4, at step SP5 the control section 87 calculates the average of the luminance level in the image of the stripe pattern 72 based on the luminance signal of the image data D63 with the luminance level calculating section 84, numerically displays the average on the level meter 86, and then moves to step SP6 where the processing is terminated.

In the aforementioned configuration, when light from the light source 13 is radiated from the base material 71A side of the test negative 71 through the image print mask 12H under the condition where the mat surface 70B of the test film 70 faces and contacts the sensitized surface 71B having the stripe pattern 72 formed thereon of the test negative 70 on the film contacting part 12E of the image print head 12, the first contact state examining device 61 photographs the image of the stripe pattern 72 irradiated with the transparent light which goes through the test negative 71 and the test film 71 in order, from the surface 70A side of the test film 70 with the video camera 63.

At this time, when the running test film 70 and test negative 71 are in an optimal contact state, the video camera 63 can obtain the image data D63 showing the clear outlines of the high transparent part 72A and the low transparent part 72B of the stripe pattern 72 in focus as shown in Fig. 8(A).

However, when the running test film 70 and test negative 71 are in a non-contact state due to space between them, the transparent light which goes through the test negative 71 is scattered by the mat surface 70B having the light scattering property of the test film 70 and as a result, the video camera 63 obtains the image data D63 showing the unclear outlines of the high transparent part 72A and the low transparent part 72B of the stripe pattern 72 in defocus as shown in Fig. 9(A).

The first contact state examining device 61 displays the photographing result by the video camera 63 on the monitor 85 as the examination resultant image 75, 77, which can make a user visually recognize at this time the contact-state or non-contact state of the test film 70 and the test negative 71, without performing the developing processing like the conventional device.

In addition, the first contact state examining device 61 displays the examination resultant image 75, 77 and 79 obtained by overlaying the waveform pattern, thereby the rising and falling of the waveform pattern can make a user visually and easily recognize at this time the contact state or non-contact state of the test film 70 and the test negative 71 as well.

Further, the first contact state examining device 61 numerically displays the average of the luminance level of the whole image data D63 on the level meter 86, which can show the numerical index for adjusting the test film 70 and the test negative 71 to be in an optimal contact state, thus the user can execute the adjustment operation of the test film 70 and the test negative 71 to be in a desired contact state very easily.

According to the aforementioned configuration, in the first contact state examining device 61, when light from the light source 13 is radiated from the base material 71A side of the test negative 71 through the image print mask 12H under the condition where the mat surface 70B of the test film 70 faces and contacts the sensitized surface 71B having the stripe pattern 72 formed thereon of the test negative 71, the image of the stripe pattern 72 irradiated with the transparent light which goes through the test negative 71 and the test film 70 in order is photographed with the video camera 63 from the surface 70A side of the test film 70, the photographing result is displayed on the monitor 85 as the examination resultant image 75, 77 or 79, which can make a user visually recognize at this time the contact state of the test film 70 and the test negative 71, without performing the developing processing like the conventional device. Thus, the contact state of the test film 70 and the test negative 71 can be easily examined in a short time.

By the way, this embodiment utilizes the test film 70 and the test negative 71. However, in principle, it is possible to employ a method using an actual negative film and positive film. Note that, such a negative film is one with a practical-use pattern in which dots are arranged at random on a track for digital audio, for example.

In this case, when the first contact state examining device 61 performs photographing from the opposite side to the light source 13 with the video camera 63 in an actual print processing, the practical-use pattern on the negative film is projected on a photographic-emulsion-coated surface of the positive film and thereby, the photographic-emulsion-coated surface can serve as a mat surface 70B to receive the projected image.

In this method, the first contact state examining device 61 performs the actual print processing at a speed approximately 5 to 10 times faster than a usual speed, so that such a special advantage can be obtained that the contact state can be always detected during the print processing of the practical-use pattern.

Note that, although in the aforementioned embodiment, the case has been described in which the test film 70 provided with the frosted mat surface 70B, the present invention is not limited to this and various kinds of test films 70 which have the light scattering property in which the image of the stripe pattern 72 does not go through when the test film 70 and the test negative 71 has space between them may be used. In this case, similar effects to the above described embodiment can be also obtained.

Further, in the aforementioned embodiment, the case has been described in which the examination resultant images 75, 77, and 79 are displayed on the monitor 85, and the average of the luminance level of the whole image data D63 is numerically displayed on the level meter 86. The present invention, however, is not limited to this and the examination resultant images 75, 77, and 79 and the average of the luminance level of the whole image data D63 may be displayed on the same monitor 85 at the same time.

Further, in the aforementioned embodiment, the case has been described in which the contact state of the running test film 70 and test negative 71 is examined while piled. The present invention, however, is not limited to this and the running film may be stopped at a desired position to examine the contact state.

Furthermore, in the aforementioned embodiment, the first contact state examining device 61 and the second contact state examining device 62 as the devices for examining contact state of films of this invention are attached to the printer for printing the movie film 50. The present invention, however, is not limited to this and a device for examining contact state of films of this invention may be attached to another kind of apparatus which uses two films in a contact state.

According to the present invention as described above, under the condition where one surface having a prescribed pattern recorded thereon of a first film faces and contacts one surface having a light scattering property of a second film, light from the light source is radiated from the other surface side of the first film, and the image of the prescribed pattern irradiated with the transparent,light which goes through the first film and the second film in order is photographed from the other surface side of the second film to display the image of the photographed prescribed pattern. As a result, when the image of the prescribed pattern is displayed clearly, the user can visually recognize at this time that the first film and the second film are in an optimal contact state and on the other hand, when the image of the prescribed pattern is displayed unclearly, the user can visually recognize at this time that the first film and the second film are not in an optimal contact state but in a non-contact state due to space between them. Thus, the device for examining contact state of films and the method of examining contact state of films can be realized, in which the contact state of two piled films can be easily examined in a short time.

Further, according to the present invention, under the condition where one surface having a prescribed pattern recorded thereon of a first film faces and contacts one surface having a light scattering property of a second film, light from the light source is radiated from the other surface side of the first film, the image of the prescribed pattern irradiated with the transparent light which goes through the first film and the second film in order is photographed from the other surface side of the second film, the waveform pattern of the luminance level according to the image of the photographed prescribed pattern is created, and the waveform pattern of the luminance level is displayed. As a result, when the outlines of the rising and falling of the waveform pattern of the luminance level is displayed clearly, the user can visually recognize at this time that the first film and the second film are in the optimal contact state and on the other hand, when the outlines of the rising and falling of the waveform pattern of the luminance level is displayed unclearly, the user can visually recognize at this time that the first film and the second film are not in the optimal contact state but in the non-contact state due to space between them. Thus the device for examining contact state of films and the method of examining contact state of films can be realized in which the contact state of two piled films can be easily examined in a short time.

Furthermore, in the present invention, in a film for examination which is used in the device for examining contact state of films to examine the contact state of piled films, when light from a light source is radiated from the film for examination side by the device for examining contact state of films under the condition where the film for examination and a second film are piled, and the contact state is examined based on the photographing result obtained by photographing the image irradiated with the transparent light which goes through the film for examination and the second film in order, a pattern of a plurality of stripes is formed along the film running direction on one surface of the film for examination which faces and contacts one surface having the light scattering property of the second film, thereby the device for examining contact state of films can clearly photograph the stripe pattern as if the films stops even while the films are running, thus making it possible to accurately examine the contact state.

### Industrial Utilization

The device for examining contact state of films, the method of examining contact state of films and the film for examination of the present invention are applied to a printer which can easily examine the contact state of films in a short time.

## Claims

1. A device for examining contact state of films, comprising:
photographing means for photographing the image of a prescribed pattern irradiated with transparent light which is radiated by a light source from the other surface side of a first film and goes through the first film and a second film in order, from the other surface side of the second film, under such a condition that one surface having the light scattering property of the second film faces and contacts one surface having the prescribed pattern recorded thereon of the first film; and
display means for displaying the image of the prescribed pattern photographed by said photographing means.

2. The device for examining contact state of films according to Claim 1, wherein
said device for examining contact state of films comprises:
waveform pattern creating means for creating a waveform pattern based on a luminance level in the image of the prescribed pattern photographed by said photographing means; and
overlaying means for overlaying the waveform pattern on the prescribed pattern.

3. The device for examining contact state of films according to Claim 1, wherein
said device for examining contact state of films comprises:
luminance level calculating means for calculating the average of a luminance level in the image of the prescribed pattern photographed by said photographing means; and
luminance level display means for numerically displaying the average of the luminance level calculated by said luminance level calculating means.

4. The device for examining contact state of films according to Claim 1, wherein
the prescribed pattern is a stripe pattern in which a high transparent part having a high light transparent property and a low transparent part having a low light transparent property are linearly and alternately laid in a running direction of the first film and the second film.

5. The device for examining contact state of films according to Claim 1, wherein
said device for examining contact state of films comprises
control means for controlling said photographing means to shift in a width direction of the first film and the second film.

6. A device for examining contact state of films, comprising:
photographing means for photographing the image of a prescribed pattern irradiated with a transparent light which is radiated by a light source from the other surface of a first film and goes through the first film and a second film in order, from the other surface side of the second film, under such a condition that one surface having the light scattering property of the second film faces and contacts one surface having the prescribed pattern recorded thereon of the first film;
waveform pattern creating means for creating a waveform pattern based on a luminance level in the image of the prescribed pattern photographed by said photographing means; and
display means for displaying the waveform pattern based on the luminance level.

7. The device for examining contact state of films according to Claim 6, wherein
said device for examining contact state of films comprises
overlaying means for overlaying the image of the prescribed pattern photographed by said photographing means on the waveform pattern.

8. The device for examining contact state of films according to Claim 6, wherein
said device for examining contact state of films comprises
luminance level calculating means for calculating the average of a luminance level in the image of the prescribed pattern photographed by said photographing means; and
luminance level display means for numerically displaying the average of the luminance level calculated by said luminance level calculating means.

9. The device for examining contact state of films according to Claim 6, wherein
the prescribed pattern is a stripe pattern in which a high transparent part having a high light transparent property and a . low transparent part having a low light transparent property are linearly and alternately laid in a running direction of the first film and the second film.

10. The device for examining contact state of films according to Claim 6, wherein
said device for examining contact state of films comprises
control means for controlling said photographing means to shift in a width direction of the first film and the second film.

11. A method of examining contact state of films, comprising:
a photographing step of photographing the image of a prescribed pattern irradiated with a transparent light which is radiated by a light source from the other surface side of a first film and goes through the first film and a second film in order, from the other surface side of the second film, under such a condition that one surface having the light scattering property of the second film faces and contacts one surface having the prescribed pattern recorded thereon of the first film; and
a display step of displaying the image of the prescribed pattern photographed by said photographing step.

12. The method of examining contact state of films according to Claim 11, wherein
said method of examining contact state of films comprises:
a waveform pattern creating step of creating a waveform pattern based on a luminance level in the image of the prescribed pattern photographed by said photographing step; and
an overlaying means for overlaying the waveform pattern on the prescribed pattern.

13. The method of examining contact state of films according to Claim 11, wherein
said method of examining contact state of films comprises:
a luminance level calculating step of calculating the average of a luminance level in the image of the prescribed pattern photographed by said photographing step; and
a luminance level display means for numerically displaying the average of the luminance level calculated by said luminance level calculating step.

14. The method of examining contact state of films according to Claim 11, wherein
the prescribed pattern is a stripe pattern in which a high transparent part having a high light transparent property and a low transparent part having a low light transparent property are linearly and alternately laid in a running direction of the first film and the second film.

15. A method of examining contact state of films, comprising
a photographing step of photographing the image of a prescribed pattern irradiated with a transparent light which is radiated by a light source from the other surface side of a first film and goes through the first film and a second film in order, from the other surface side of the second film, under such a condition that one surface having the light scattering property of the second film faces and contacts one surface having the prescribed pattern recorded thereon of the first film;
a waveform pattern creating step of creating a waveform pattern based on a luminance level in the image of the prescribed pattern photographed by said photographing step; and
a display step of displaying the waveform pattern based on the luminance level.

16. The method of examining contact state of films according to Claim 15, wherein
said method of examining contact state of films comprises
an overlaying step of overlaying the image of the prescribed pattern photographed by said photographing step on the waveform pattern.

17. The method of examining contact state of films according to Claim 15, wherein
said method of examining contact state of films comprises
a luminance level calculating step of calculating the average of a luminance level in the image of the prescribed pattern photographed by said photographing step; and
a luminance level display step of numerically displaying the average of the luminance level calculated by said luminance level calculating step.

18. The method of examining contact state of films according to Claim 15, wherein
the prescribed pattern is a stripe pattern in which a high transparent part having a high light transparent property and a low transparent part having a low light transparent property are linearly and alternately laid in a running direction of the first film and the second film.

19. A film for examination used in a device for examining contact state of films to examine the contact state of piled films, comprising
in the case of examining the contact state using the photographing result obtained by photographing the image irradiated with a transparent light which is radiated by a light source from the film for examination side and goes through the film for examination and a second film in order, under such a condition that said film for examination and the second film are piled in said device for examining contact state of films,
a pattern of a plurality of stripes formed in a running direction of films on one surface of said film for examination which has to face and contact one surface having the light scattering property of the second film.

20. The film for examination according to Claim 19, wherein
the stripe pattern is a stripe pattern in which a high transparent part having a high light transparent property and a low transparent part having a low light transparent property are alternately, periodically and linearly laid with the same width in the running direction of films.

21. The film for examination according to Claim 19, wherein
the stripe pattern is a stripe pattern in which a high transparent part having a high light transparent property and a low transparent part having a low light transparent property are alternately, irregularly and linearly laid with different widths in the running direction of films.
